# DEMANDE DE BREVET EUROPEEN

(11) **EP 1 293 137 A1**
(43) Date de publication de la demande: **19.03.2003**
(21) Numéro de dépôt: 02292113.4
(22) Date de dépôt: 28.08.2002
(51) Int. Cl.: A41D 27/24, A41C 5/00, A41C 3/12, A41F 15/00

(54) **Procece d'assemblage de deux zones de bord d'au moins une piece de tissu et application a la realisation d'une bretelle**

(30) Priorité: 03.09.2001 FR 0111365
(71) Demandeur: Altounian, Evelyne, 75002 Paris (FR); Altounian, Georges Lucien, 75002 Paris (FR)
(72) Inventeur: Altounian, Evelyne, 75002 Paris (FR); Altounian, Georges Lucien, 75002 Paris (FR)
(74) Mandataire: Fruchard, Guy

(57) **Abrégé**

L'invention concerne un procédé d'assemblage de deux zones de bord (1,1') d'au moins une pièce de tissu, comprenant les étapes de superposer les zones de bord (1,1'), de souder celles-ci selon une ligne de soudure (3), de déployer le tissu de part et d'autre de la ligne de soudure (3), et d'appliquer sur une face du tissu une pièce de renfort s'étendant à cheval sur la ligne de soudure.

## Description

L'invention concerne un procédé d'assemblage de deux zones de bord d'au moins une pièce de tissu et son application à la réalisation d'une bretelle, destiné notamment à la production de vêtements portés à même la peau.

Dans ce domaine, divers types d'assemblage sont traditionnellement employés, comme la couture, le collage, ou encore le soudage. Tous ont en commun le fait de requérir un chevauchement des parties à assembler au moins dans la zone d'assemblage, ce qui contribue à la création d'une surépaisseur qui peut être visible au travers d'un vêtement serré, surtout lorsque celui-ci est réalisé dans un tissu lisse.

L'assemblage par couture de zones de bord nécessite au surplus de replier les bords sur eux-mêmes pour éviter qu'ils ne s'effilochent, ce qui contribue à augmenter encore l'épaisseur de la zone d'assemblage.

L'invention vise à proposer un procédé d'assemblage simple à mettre en oeuvre, permettant d'éviter les inconvénients précités.

Selon l'invention, on prévoit un procédé d'assemblage de deux zones de bord d'au moins une pièce de tissu, comprenant les étapes de superposer les zones de bord, de souder celles-ci selon une ligne de soudure, de déployer le tissu de part et d'autre de la ligne de soudure, et d'appliquer sur une face du tissu une pièce de renfort s'étendant à cheval sur la ligne de soudure.

Ainsi, le soudage assure un positionnement précis des zones de bord permettant de les maintenir en place pendant l'application de la pièce de renfort de sorte que le risque de déplacement des zones de bord l'une par rapport à l'autre est éliminé. La pièce de renfort a pour fonction d'assurer la solidité de l'assemblage.

Compte tenu de sa fonction de positionnement, la ligne de soudure peut avoir une largeur faible, ce qui rend l'assemblage très discret. Par ailleurs, l'assemblage ne nécessite pas le chevauchement des parties de tissu, ce qui avec le choix d'une bande de renfort de faible épaisseur, contribue à rendre l'assemblage peu épais, et donc pratiquement invisible.

Selon un mode de mise en oeuvre particulier de l'invention, le procédé comporte en outre l'étape de découper les parties de tissu le long de la ligne de soudure.

Lorsque la découpe est réalisée à distance de la ligne de soudure, les portions des zones de bord s'étendant entre la ligne de soudure et la ligne de découpe forment des languettes qui peuvent avoir un effet décoratif, mais qui peuvent également avoir des fonctions techniques, comme constituer un support de moyens d'accrochage à d'autres parties de vêtements.

Lorsque la découpe est réalisée de façon immédiatement adjacente à la ligne de soudure, le déploiement du tissu forme une lèvre dont la hauteur est limitée à la largeur de la ligne de soudure. En réalisant une ligne de soudure de très faible largeur, il est donc possible d'obtenir une lèvre de faible hauteur qui peut être noyée dans l'épaisseur du tissu lorsque celui-ci est déployé de part et d'autre de la ligne de soudure, ce qui rend la soudure encore plus discrète.

Selon un aspect particulièrement avantageux de l'invention, la bande de renfort est collée du côté des parties sur lequel la découpe a laissé subsister la lèvre.

La soudure assure ainsi une jonction parfaite de sorte que l'on obtient sur la face opposée à la bande de renfort l'impression d'une quasi-continuité entre les deux zones de bord assemblées. Dans le cas de tissus extensibles, la bande de renfort est de préférence élastique de sorte que la finesse de la soudure et l'élasticité de la bande de renfort réalisent un assemblage qui respecte intégralement l'élasticité du tissu, ce qui est particulièrement avantageux dans le domaine de la lingerie ou du maillot de bain.

En outre, la lèvre, qui peut avoir été rendue rigide du fait de l'échauffement qu'ont subi les fibres la constituant, est recouverte par la bande de renfort et ne risque donc pas de blesser la peau.

Selon une variante du procédé, celui-ci comporte en outre l'étape de découper des motifs à l'emporte-pièce le long d'au moins un côté de la ligne de soudage.

De préférence, l'une au moins des étapes de découpage précitées est réalisée simultanément à l'opération de soudage.

Ainsi, le soudage, la découpe et la réalisation de motifs pourront être réalisés par des outils placés sur un support commun et donc réalisés en un seul passage du support, ce qui permet des gains de productivité importants.

L'invention concerne également un procédé de fabrication d'une bretelle, comportant les étapes de plier sur elle-même une pièce de tissu en bande pour obtenir deux zones de bord superposées, de souder les deux zones de bord selon une ligne de soudure et de couper les parties de façon immédiatement adjacente à la ligne de soudure pour obtenir une pièce tubulaire, puis de déformer la pièce tubulaire ainsi obtenue de façon qu'elle présente une face au milieu de laquelle s'étend la ligne de soudure, et d'appliquer sur cette face une bande de renfort à cheval sur la ligne de soudure.

On réalise ainsi facilement des bretelles de sous-vêtements sans couture, ce qui rend la bretelle moins épaisse et donc moins visible à travers les vêtements. En outre, la bande de renfort peut être réalisée en une matière augmentant le confort de contact avec la peau lorsque la bretelle est destinée à être montée avec la bande de renfort du côté intérieur de la bretelle. La bande de renfort peut comporter des motifs décoratifs si la bretelle est destinées à être montée avec la bande de renfort du côté extérieur de la bretelle.

D'autres caractéristiques et avantages de l'invention apparaîtront plus clairement à la lumière de la description qui suit de modes de mise en oeuvre particuliers non limitatifs de l'invention. Il sera fait référence aux figures annexées parmi lesquelles :
- la figure 1 est une vue de face avec coupe partielle de moyens de mise en oeuvre d'un procédé d'assemblage de deux pièces de tissu selon l'invention;
- la figure 2 est une vue en coupe des pièces de tissu illustrées à la figure 1 à l'issue de leur assemblage ;
- la figure 3 est une vue de face avec coupe partielle de moyens de mise en oeuvre d'une variante du procédé d'assemblage de deux pièces de tissu selon l'invention ;
- la figure 4 est une vue en perspective partielle des pièces de tissu illustrées à la figure 3 à l'issue de leur assemblage ;
- la figure 5 est une vue de face avec coupe partielle de moyens de mise en oeuvre d'un autre procédé d'assemblage de deux pièces de tissu selon l'invention;
- la figure 6 une vue en coupe des pièces de tissu illustrées à la figure 5 à l'issue de leur assemblage ;
- la figure 7 est une vue en coupe d'une pièce tubulaire dans une étape intermédiaire de la fabrication d'une bretelle par un procédé selon l'invention ;
- la figure 8 est une vue en coupe de la pièce de tissu à l'issue de la fabrication de la bretelle.

Sur toutes les figures, l'épaisseur des pièces de tissu ainsi que l'épaisseur de la pièce de renfort ont été exagérées par rapport aux dimensions des autres éléments illustrés en vue de mieux faire comprendre l'invention. En réalité, ces épaisseurs sont de l'ordre de quelques dixièmes de millimètres.

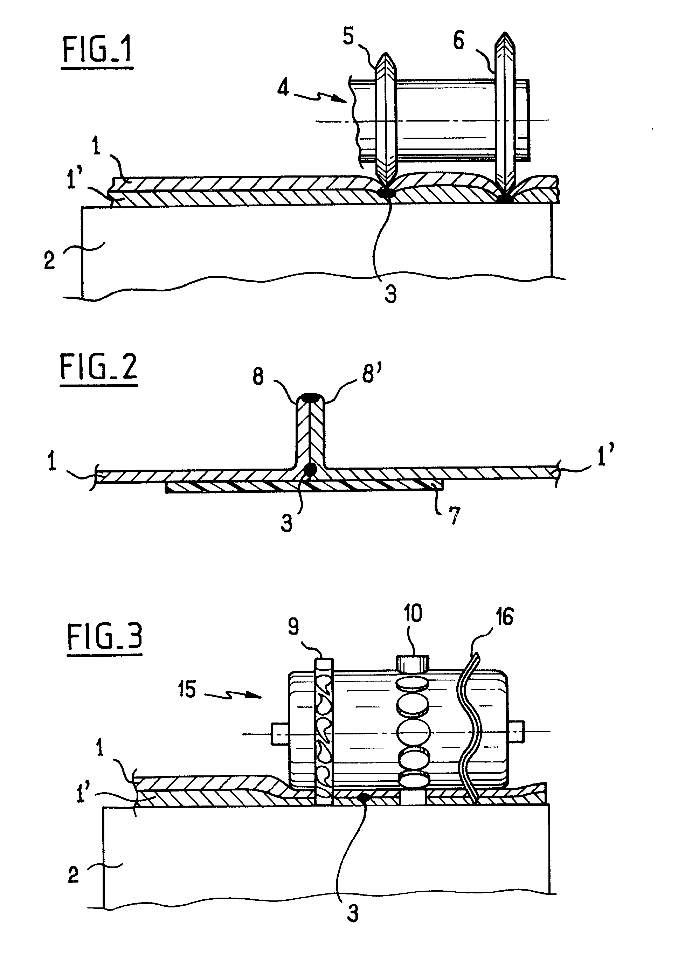

En référence à la figure 1, le procédé selon l'invention comporte tout d'abord l'étape de superposer deux pièces de tissu 1, 1', par exemple en polyamide, sur une table de travail 2, puis de souder les deux pièces de tissu selon une ligne de soudure 3 symboliquement représentée sur les figures par une zone noire.

La ligne de soudure 3 est obtenue par exemple par ultrasons à l'aide d'un outil 4 rotatif portant une première molette 5 que l'on fait rouler sans glisser sur les pièces de tissu 1,1' en maintenant une distance entre la molette 5 et la table de travail 2 de façon à provoquer une soudure des pièces de tissu 1,1' tout en évitant de découper ces dernières. A cet effet, l'outil 4 est monté à rotation en extrémité d'un porte-outil non représenté, qui peut être manoeuvré manuellement ou être déplacé par une machine. L'outil 4 et la table de travail 2 sont convenablement reliés à l'installation d'ultrasons de façon connue en soi.

L'outil 4 porte ici une seconde molette 6 qui affleure la table de travail 2, ce qui permet de découper les pièces de tissu 1,1' selon une ligne de découpe à distance de la ligne de soudure 3 et parallèle à cette dernière. Dans l'exemple illustré selon lequel la molette de découpe 6 est portée par le même outil à ultrasons que la molette 5, les pièces de tissu 1,1' sont également soudées le long de la ligne de découpe.

Comme cela est visible à la figure 2, le procédé selon l'invention comprend ensuite l'étape de déployer les pièces de tissu 1, 1' de part et d'autre de la ligne de soudure 3, et d'appliquer une bande de renfort 7, par exemple en élastomère, le long de la ligne de soudure 3 à cheval sur celle-ci, par exemple par thermocollage.

L'assemblage ainsi réalisé laisse subsister des languettes 8,8' s'étendant du côté de la face des pièces de tissu opposée à la face sur laquelle la bande de renfort 7 est appliquée. Les languettes 8,8' sont formées par les portions des pièces de tissus 1,1' s'étendant entre la ligne de soudure et la ligne de découpe générée par la molette 6, et sont soudées entre elles le long de leur bord libre.

La soudure sert uniquement à lier les deux pièces de tissu 1, 1' en vue de les positionner, la solidité de la liaison étant assurée par la bande de renfort 7 qui est capable de résister à un effort de traction tendant à séparer les pièces de tissu 1,1' lorsque les pièces de tissu assemblées sont manipulées ou lorsque le vêtement est porté. Après mise en place de la pièce de renfort, la ligne de soudure 3 n'est donc pas sollicitée en arrachement et peut donc être très fine, ce qui la rend discrète.

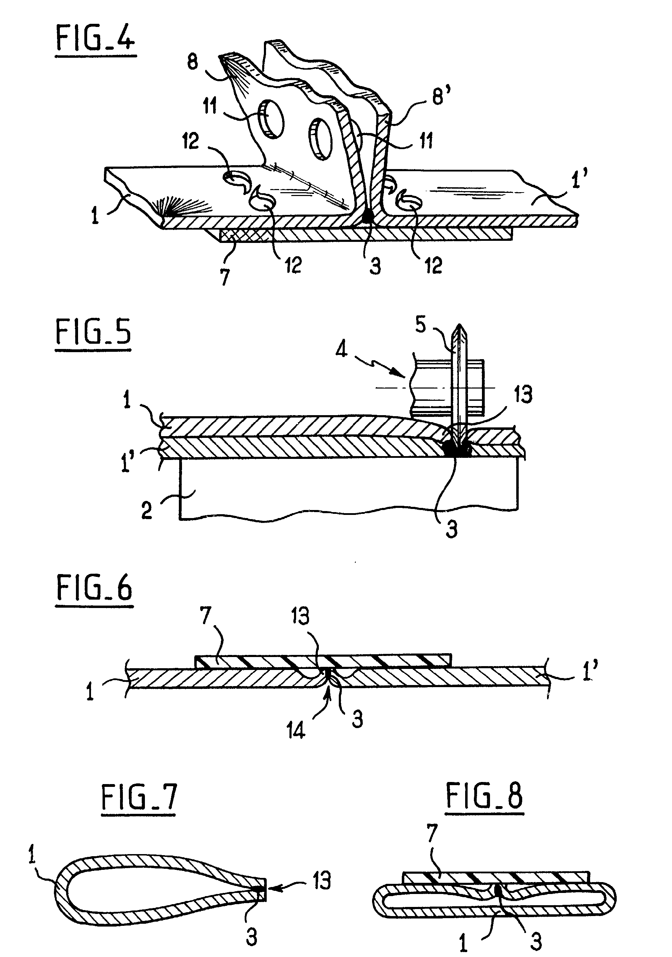

Selon une variante du procédé illustré aux figures 3 et 4, on réalise des découpes à l'emporte-pièce le long la ligne de soudure 3.

A cet effet, on réalise tout d'abord une ligne de soudure 3 avec un outil à ultrasons comportant seulement la molette 5, puis les pièces de tissu 1,1' ainsi soudées sont amenées sous un outil rotatif 15 de découpe à froid qui comporte d'une part des couronnes de poinçons 9 et 10 qui permettent de perforer les pièces de tissu 1,1' selon des motifs divers, et d'autre part une lame 16 qui permet de découper les languettes 8,8' selon des bords ondulés non soudés entre eux.

Le résultat final du procédé est visible à la figure 4, où, l'on constate que le bord des languettes 8,8' est ondulé, tandis que la couronne de poinçons 10 a réalisé dans ces languettes des ouvertures 11 qui peuvent par exemple servir au passage d'un cordon non représenté.

La couronne de poinçons 9 a quant à elle laissé des ouvertures 12 sur les parties courantes des pièces de tissu 1,1', les ouvertures 12 s'étendant ici en regard de la bande de renfort 7 de sorte qu'ils laissent apparaître la face de la bande de renfort 7 appliquée sur les pièces de tissu 1,1'. Cette caractéristique permet, en jouant par exemple sur la couleur de la bande de renfort 7, d'obtenir des effet esthétiques nouveaux.

Selon un autre mode de mise en oeuvre du procédé selon l'invention illustré aux figures 5 et 6, les pièces de tissu 1, 1' sont soudées selon une ligne de soudure 3 et découpées selon une ligne de découpe s'étendant de façon immédiatement adjacente à la ligne de soudure 3.

Comme cela est illustré à la figure 5, un outil 4 rotatif relié à l'installation d'ultrasons et comportant une molette 5 provoque la découpe et le soudage simultané des pièces de tissu 1,1' et laisse à l'extrémité des parties 1, 1' une lèvre 13 de largeur inférieure à l'épaisseur d'une des pièces de tissu.

Puis, comme cela est visible à la figure 6, on déploie les pièces de tissu 1,1' de part et d'autre de la ligne de soudure 3. La lèvre 13 s'étend alors perpendiculairement aux pièces de tissu 1,1' et est noyée dans l'épaisseur des pièces de tissu 1,1'.

On applique alors une pièce de renfort 7 le long de la ligne de soudure 3 à cheval sur celle-ci, mais cette fois-ci, du côté de la lèvre 13.

Seul un creux 14 discret subsiste du côté des pièces de tissus 1,1' non recouvert par la bande de renfort, ce creux étant à peine perceptible au toucher. On obtient du côté du creux l'impression d'une quasi-continuité du tissu.

Selon un procédé voisin illustré en figure 6 et 7, l'assemblage selon l'invention peut servir à réaliser des bretelles de vêtements particulièrement fines, ce qui les rend discrètes lorsqu'elles sont portées sous des vêtements serrés.

A cet effet, et comme cela est visible à la figure 6, on plie une bande de tissu 1 de façon à superposer les deux bords de la bande de tissu 1.

Puis on soude les bords de la bande de tissu 1 par la réalisation d'une ligne de soudure 3, et on découpe les deux bords selon une ligne de découpe immédiatement adjacente à la ligne de soudure, afin de laisser une lèvre 13 de faible largeur.

Puis on déforme le tube ainsi obtenu de façon que la lèvre 13 s'étende au milieu d'une des faces du tube plié, et on applique sur cette face une bande de renfort 7 à cheval sur la ligne de soudure 3, comme illustré par la figure 8.

On obtient ainsi une bretelle dont l'épaisseur est limitée à deux fois l'épaisseur de la pièce de tissu, augmentée de l'épaisseur de la pièce de renfort.

L'invention n'est pas limitée au mode particulier de réalisation qui vient d'être décrit, mais bien au contraire entend couvrir toute variante qui entre dans le cadre de l'invention tel que défini par les revendications.

Bien que les modes de mise en oeuvre décrits sont relatifs à l'assemblage de deux pièces de tissu ou de deux bords d'une même pièce de tissu, l'invention s'applique plus généralement à l'assemblage de deux zones de bord d'au moins une pièce de tissu.

Bien que l'on ait indiqué que les pièces de tissu sont en polyamide, l'invention s'applique à tout type de tissu susceptible d'être soudé, les deux pièces de tissu à assembler pouvant être de matériaux différents.

Bien que le soudage ait ici été illustré comme étant réalisé par ultrasons, on pourra également réaliser le soudage par toute autre technique, comme le soudage au laser à chaud.

L'invention entend également protéger des procédés dans lesquels l'étape de soudage est remplacée par tout type d'opération permettant la liaison des deux pièces selon une ligne.

Dans le cas, par exemple, où le procédé de l'invention est mis en oeuvre pour assembler des parties de tissu faits d'un matériau qui se soude mal, le procédé pourra comporter en remplacement de l'étape de soudage l'étape d'insérer entre les deux parties de tissu à assembler un matériau liant, par exemple un polymère, qui adhère aux pièces de tissu au passage d'un outil chauffant et/ou pressant.

Bien que l'on ait indiqué que l'on applique une seule bande de renfort sur les pièces de tissu, on pourra également appliquer une bande de renfort de chaque côté des pièces de tissu.

Bien que l'on ait indiqué que la bande de renfort est rapportée par thermocollage, la bande de renfort pourra être fixée par tout procédé, comme un collage à froid.

Bien que l'on ait indiqué que la bande de renfort est en polymère, elle pourra être plus généralement prévue dans tout type de matériau, élastique ou non, transparent ou non. En particulier, la bande de renfort pourra être réalisée dans un matériau étanche, pour rendre l'assemblage étanche. La bande de renfort pourra comporter tout type de motifs fantaisie, comme des bords ondulés. On pourra également dans le cadre de l'invention insérer des éléments techniques ou décoratifs entre la bande de renfort et les parties de tissu.

Bien que la molette 5 ait été illustrée avec un bord périphérique circulaire permettant de réaliser une ligne de soudure rectiligne, on pourra utiliser une molette à bord périphérique de forme adaptée pour réaliser une ligne de soudure ondulée, en zigzag, ou selon tout autre motif. Par ailleurs, la molette, qu'elle soit à bord périphérique circulaire ou non, pourra être déplacée selon un trajet rectiligne ou selon un trajet curviligne par rapport aux parties de tissu à assembler.

## Revendications

1. Procédé d'assemblage de deux zones de bord (1,1') d'au moins une pièce de tissu, **caractérisé en ce qu'**il comprend les étapes de superposer les zones de bord (1,1'), de souder celles-ci selon une ligne de soudure (3), de déployer le tissu de part et d'autre de la ligne de soudure (3), et d'appliquer sur une face du tissu une pièce de renfort s'étendant à cheval sur la ligne de soudure.

2. Procédé d'assemblage selon la revendication 1, **caractérisé en ce qu'**il comporte en outre l'étape de découper les zones de bord (1,1') à distance de la ligne de soudure (3).

3. Procédé d'assemblage selon la revendication 1, **caractérisé en ce qu'**il comporte en outre l'étape de découper les parties (1,1') de façon immédiatement adjacente à de la ligne de soudure (3) avant de déployer le tissu.

4. Procédé d'assemblage selon la revendication 1, **caractérisé en ce qu'**il comporte en outre l'étape de découper des motifs (11,12) à l'emporte-pièce au moins d'un côté de la ligne de soudure (3).

5. Procédé d'assemblage selon la revendication 4, **caractérisé en ce que** le découpage des motifs est effectué avant de déployer les parties.

6. Procédé d'assemblage selon l'une au moins des revendications 2 à 5, **caractérisé en ce que** l'étape de découpage est réalisée simultanément à l'étape de soudage.

7. Procédé d'assemblage selon la revendication 3, **caractérisé en ce que** la pièce de renfort (7) est appliquée sur une face du tissu (1,1') sur laquelle la découpe a laissé subsister une lèvre (13).

8. Procédé de fabrication d'une bretelle, **caractérisé en ce qu'**il comporte les étapes de plier sur elle-même une pièce de tissu (1) en bande pour obtenir deux zones de bord superposées, de souder les deux zones de bord selon une ligne de soudure (3) et de couper les parties de façon immédiatement adjacente à la ligne de soudure (3) pour obtenir une pièce tubulaire, puis de déformer la pièce tubulaire ainsi obtenue de façon qu'elle présente une face au milieu de laquelle s'étend la ligne de soudure (3), et d'appliquer sur cette face une bande de renfort (7) à cheval sur la ligne de soudure (3).

9. Procédé selon l'une des revendications 1 à 8, **caractérisé en ce que** la pièce ou bande de renfort (7) est en élastomère.
